# EUROPÄISCHE PATENTANMELDUNG

(11) **EP 2 159 150 A1**
(43) Veröffentlichungstag der Anmeldung: **03.03.2010**
(21) Anmeldenummer: 09166025.8
(22) Anmeldetag: 21.07.2009
(51) Int. Cl.: B62K 21/02, B62K 19/38, B62K 19/16

(54) **Fahrradgabel für Scheibenbremsen**

(30) Priorität: 02.09.2008 DE 102008045301
(71) Anmelder: Canyon Bicycles GmbH, 56073 Koblenz (DE)
(72) Erfinder: Kaiser, Michael, 56073, Koblenz (DE)
(74) Vertreter: von Kirschbaum, Alexander

(57) **Zusammenfassung**

Eine Fahrradgabel für Scheibenbremsen, insbesondere eine Fahrradgabel für Rennräder, weist zwei über eine Gabelbrücke (12) miteinander verbundene Gabelbeine (10, 11) auf. An einem der beiden Gabelbeine (11) ist eine Bremssattelbefestigung (20) angeordnet. Zur Aufnahme von Bremskräften und Bremsmomenten ist zumindest im Bereich der Bremssattelbefestigung (20) das eine der beiden Gabelbeine (11) mit einem Versteifungselement versehen. Bei dem Versteifungselement handelt es sich beispielsweise um ein Verdicken der Wandstärke und/ oder Vergrößern des Umfangs des Gabelbeins (11).

## Beschreibung

Die Erfindung betrifft eine Fahrradgabel für Scheibenbremsen.

Die Verzögerung bei Rennrädern erfolgt mit Hilfe von Felgenbremsen. Felgenbremsen weisen den Nachteil auf, dass die Bremswirkung bei Nässe abnimmt. Dies tritt auch bei winterlichen Verhältnissen und bei Bildung einer Schnee- bzw. Eisschicht auf. Ein weitere Nachteil besteht darin, dass bei einem Speichenbruch auf Grund des hierdurch entstehenden Seitenschlags im Rad die Felgen an den Bremsbelegen schleift. Ferner weisen Felgenbremsen den Nachteil auf, dass insbesondere bei Bergabfahrten eine starke Erwärmung der Felgenbremsen stattfindet. Dies führt zum Nachlassen der Bremswirkung. Ebenso kann es auf Grund der Erwärmung zu Beschädigungen oder gar zum Platzen der Schläuche kommen,

Bei hochwertigen Mountenbikes ist es bekannt Hydraulik-Scheibenbremsen vorzusehen. Diese weisen gegenüber der Felgenbremsen insbesondere den Vorteil auf, dass die Bremswirkung bei Nässe oder winterlichen Verhältnissen deutlich besser ist. Auch bei Auftreten eines Speichenbruches wird das Fahrverhalten weniger beeinträchtigt.

Es ist jedoch technisch nicht möglich, die aus dem Bereich der Mountenbikes bekannten Hydraulik-Scheibenbremsen bei Rennrädern einzusetzen. Dies liegt insbesondere darin begründet, dass durch das Vorsehen einer Hydraulikbremse hohe Kräfte und Momente auf das Gabelrohr wirken, das den Bremssattel trägt. Um diese Kräfte aufnehmen zu können, werden bei Mountenbikes äußerst steife Vorderradgabein eingesetzt. Dies ist bei Mountenbikes möglich, da die Vorderradgabeln sodann gesondert gefedert sind. Um eine ausreichende Bodenhaftung sicherzustellen, ist es bei steif ausgebildeten Gabelrohren stets erforderlich, diese zu federn, da durch die relativ unelastische Gabel selbst ein Gewährleisten der Bodenhaftung durch die Verformung der Gabelrohre nicht möglich ist.

Das Vorsehen von Federgabein ist jedoch aus Gewichtsgründen bei Rennrädern nicht erwünscht. Die erforderliche Elastizität muss bei Rennrädern durch eine entsprechend elastische Vorderradgabel gewährleistet werden. Durch die Elastizität insbesondere des unteren in Richtung der Ausfallenden weisenden Bereichs der Gabelrohre wird die erforderliche Bodenhaftung realisiert. Eine entsprechend Elastizität des unteren Bereichs der Gabelrohre ist bei Rennradgabeln zwingend erforderlich, da beispielsweise bei höheren Geschwindigkeiten ansonsten das Vorderrad bei welliger Fahrbahn kurzfristig abheben würde. Dies würde insbesondere in Kurven zu Stürzen führen. Das Versteifen einer Rennradgabel zum Vorsehen einer Scheibenbremse ist daher nicht möglich. Auch das Vorsehen einer Federung ist aus Gewichtsgründen nicht erwünscht und würde ferner beim Fahren im Wiegetritt zu Verlusten führen. Ein Teil der Beinkraft ginge durch das Einfedern verloren. Im Übrigen würde sich durch das Vorsehen von Federgabel bei Rennrädern das Fahrverhalten nachteilig ändern, Insbesondere würde ein trägeres Lenkverhalten und eine unerwünschte Verlängerung des Radstandes erfolgen.

Ferner ist es aus EP 06 778 394 bekannt, bei einer Fahrradgabel für Rennrädern eine Doppel-Scheibenbremse vorzusehen. Bei dieser Rennradbremse ist an jedem der beiden Gabelbeine der Fahrradgabel jeweils ein Bremssattel befestigt. Mit der Nabe des Vorderrads ist auf jeder Seite eine Bremsscheibe befestigt. Durch das Vorsehen von zwei Bremsscheiben und jeweils einem Bremssattel je Gabelrohr ist es möglich, eine Hydraulik-Scheibenbremse auch bei Rennrädern vorzusehen, wobei weiterhin die erforderliche Elastizität der Rennradkabel realisiert werden kann, Das Vorsehen einer Doppelscheibenbremse bei Rennrädern hat jedoch den Nachteil, dass diese erheblich schwerer als Felgenbremsen sind.

Ferner ist in DE 198 42 935 vorgeschlagen, eine Scheibenbremse bei Treckingrädern bzw. Tourenrädern vorzusehen. Derartige Räder sind generell deutlich massiver und steifer ausgebildet als Rennräder. Die bei Rennrädern auftretenden hohen Belastungen treten bei Tourenrädern nicht auf. Des Weiteren wurden Scheibenbremsen auch bei Tourenrädern nur in Verbindung mit gefederten Gabeln, wie bei Mountainbikes realisiert. Die DE 198 42 935 beschreibt in allgemeiner Form einen Montagehalter, der an einer Außenseite des Gabelbeins angeordnet werden soll. Bei den auftretenden hohen Bremskräften ist diese Verbindung technisch nicht oder nur äußerst schwierig realisierbar. Insbesondere erfolgt bei einer derartigen Befestigung an einer Außenseite des Gabelbeins keine zufriedenstellende Übertragung der Bremskräfte und/ oder Bremsmomente auf die Gabel.

Aufgabe der Erfindung ist es, eine verbesserte Fahrradgabel für Scheibenbremsen zu schaffen, die auch als Rennrad-Gabel geeignet ist.

Die Lösung der Aufgabe erfolgt erfindungsgemäß durch die Merkmale des Anspruchs 1.

Die erfindungsgemäße Fahrradgabel für Scheibenbremsen weist zwei über eine Gabelbrücke miteinander verbundene Gabelbeine auf. An den Ausfallenden der beiden Gabelbeine ist die Nabe bzw. die Laufradachse des Vorderrads befestigbar. An einem der beiden Gabelbeine ist eine Bremssattelbefestigung vorgesehen. Hierbei handelt es sich beispielsweise um zwei in Fahrtrichtung hinter dem Gabelbein mit diesem fest verbundene Ansätze oder Augen, die ein Gewinde aufweisen. Entsprechende Ansätze des Bremssattels können somit zur Befestigung des Bremssattels mit der Bremssattelbefestigung fest verbunden werden. Erfindungsgemäß ist zumindest im Bereich der Bremssattelbefestigung eines der beiden Gabelbeine mit einem Versteifungselement verbunden. Das Versteifungselement dient zur Aufnahme bzw. Übertragung von Bremskräften und Bremsmomenten. Die beim Bremsen auftretenden Kräfte können somit besser von der Bremsscheibe auf den Bremssattel übertragen und von dem Gabelbein aufgenommen werden. Durch das Vorsehen des Versteifungselements weist dasjenige Gabelbein, das den Bremssattel trägt, eine höhere Steifigkeit bzw, Festigkeit auf. Ein entsprechendes Versteifungselement ist an dem anderen Gabelbein, das keinen Bremssattel trägt, nicht vorgesehen. Die Fahrradgabel ist somit asymmetrisch und weist zwei unterschiedlich ausgebildete Gabelbeine auf. Hierdurch ist es möglich, bei einer relativ geringen Gewichtserhöhung eine einseitige Scheibenbremse vorzusehen. Dies ist insbesondere auch bei relativ leichten, vorzugsweise aus Faserverbundwerkstoff hergestellten Fahrradgabeln möglich. Durch Vorsehen des Versteifungselements an dem entsprechenden Gabelbein ist es möglich, auch bei Rennrädern eine Scheibenbremse vorzusehen. Auf Grund der einseitigen Versteifung der Fahrradgabel, insbesondere der Rennrad-Fahrradgabel, kann bei nur geringer Gewichtserhöhung, bezogen auf die Fahrradgabel, eine einseitige Scheibenbremse vorgesehen werden. Diese weist ein erheblich geringeres Gewicht als eine Doppel-Scheibenbremse, wie in EP 06 778 394 beschrieben, auf.

Ein weiterer wesentlicher Vorteil des Vorsehens von Scheibenbremsen ist insbesondere bei Rennrädern, dass die Bremswirkung nicht mehr über die Felge erfolgt und somit deutlich verbessert ist. Dies ist insbesondere bei Regen oder anderen Verschmutzungen der Felge der Fall. Des Weiteren kann die Form der Felge freier gestaltet werden, da keine Auflagefläche für einen Bremsklotz vorgesehen sein muss. Hierdurch sind Gewichtseinsparungen möglich. Insbesondere ist es möglich, aus Faserverbundwerkstoff, insbesondere Karbon, hergestellte Felgen zu verwenden. Derartige Felgen weisen ein schlechtes Bremsverhalten auf, so dass sie in Verbindung mit Felgenbremsen nicht bzw. nur mit erheblichem technischem Aufwand einsetzbar sind.

Durch das erfindungsgemäße Vorsehen eines Versteifungselements an einem der beiden Gabelbeine ist es möglich, Rennrad-Fahrradgabein zu konstruieren, bei denen einerseits das eine Gabelbein genug Steifigkeit aufweist, um die Bremskräfte und Bremsmomente zu übertragen, anderseits die Fahrradgabel weiterhin eine ausreichende Elastizität aufweist, die bei Rennrad-Fahrradgabeln, d.h. bei üblicherweise ungefederten Fahrradgabeln erforderlich ist.

Das erfindungsgemäß vorgesehene Versteifungselement in einer der beiden Gabelbeine bewirkt somit eine zufriedenstellende Aufnahme und Übertragung der auftretenden Bremskräfte und/ oder Bremsmomente auf das entsprechende Gabelbein. Insbesondere ist das Versteifungselement in das Gabelbein integriert. Dies führt dazu, dass die äußere Formgestaltung sich vorzugsweise im Wesentlichen nicht von der Formgestaltung des anderen Gabelbeins unterscheidet. Es erfolgt vorzugsweise insbesondere nur eine Verdickung des Gabelbeins, Hierbei wäre es beispielsweise auch möglich, das zweite Gabelbein aus rein optischen Gründen durch Vorsehen einer zusätzlichen, insbesondere nicht tragenden Kunststoffschicht oder einer Schaumlage zu verdicken, so dass die beiden Gabelbeine optisch die gleiche Dicke aufweisen.

Insbesondere ist das Versteifungselement derart angeordnet bzw. ausgebildet, dass das Gabelbein weiterhin eine glatte, stufenfreie Außenkontur aufweist bzw. zwischen dem Gabelbein und dem Versteifungselement ein fließender, stufenfreier Übergang realisiert ist. Hierbei ist es bevorzugt, dass das die Scheibenbremse tragende Gabelbein weiterhin einen runden, ovalen oder elliptischen Querschnitt, d.h. einen Querschnitt mit gekrümmter, stufenfreier Außenkontur aufweist. Hierdurch ist eine besonders gute Einleitung der auftretenden Bremskräfte und/ oder Bremsmomente in das Gabelbein möglich, Das Auftreten von Spannungsspitzen und dergleichen ist vermieden.

Besonders bevorzugt ist es, dass das Versteifungselement eine Verdickung der Wandstärke des Gabelbeins, insbesondere im Bereich der Bremssattelbefestigung, aufweist. Vorzugsweise ist das Gabelbein zumindest im Bereich der Bremssattelbefestigung um mindestens 0,5 mindestens 1 mm dicker. Hierbei ist es besonders bevorzugt, dass die Verdickung des Gabelbeins in Fahrradlängsrichtung auf der nach hinten gewandten Rückseite, an der auch die Augen zur Befestigung des Bremssattels angeordnet sind, dicker ist. Das Gabelbein muss somit nicht über den gesamten Querschnitt im Bereich der Bremssattelbefestigung eine dickere Wandstärke aufweisen. Bevorzugt ist es, dass die Dicke der Wandstärke, ausgehend von der Rückseite der Gabel, d.h. ausgehend von den Befestigungsaugen für den Bremssattel, nach vorne abnimmt. Die Fahrradgabel ist somit seitlich zwar noch verdickt, aber weniger verdickt als auf der Rückseite und ggf. auf ihrer Vorderseite nicht mehr oder nur noch geringfügig verdickt.

Bei einer ggf. ausschließlich als Verdickung der Wandstärke ausgebildeten Versteifungselement ist es möglich, dass die beiden Gabelbeine äußerlich identisch sind. Bevorzugt ist es jedoch, dass zur guten Einleitung der beim Bremsen auftretenden Kräfte und Momente der Umfang des Gabelbeins zumindest im Bereich der Bremssattelbefestigung vergrößert ist. Dies kann mit einer Vergrößerung der Wandstärke einhergehen. Es ist jedoch auch möglich, ein Versteifungselement auszugestalten, das ausschließlich durch Vergrößerung des Umfangs bei gleicher Wandstärke realisiert ist.

Wie auch bei der Vergrößerung der Wandstärke bevorzugt, ist es bei der Vergrößerung des Umfangs ebenfalls bevorzugt, die Breite der Gabel in Rahmenlängsrichtung zu vergrößern und ggf. quer zur Rahmenlängsrichtung unverändert zu belassen oder zumindest geringfügiger zu vergrößern als in Rahmenlängsrichtung. Hierdurch wird der Tatsache Rechnung getragen, dass die Bremskräfte im Wesentlichen in Rahmenlängsrichtung auf die Bremsscheibe wirken.

Besonders bevorzugt ist es, dass die vorstehend beschriebenen unterschiedlichen Ausgestaltungen des Versteifungselements miteinander kombiniert werden. Des Weiteren ist es besonders bevorzugt, dass das Versteifungselement einstückig mit dem Gabelbein ausgebildet ist, wobei zumindest die beiden Gabelbeine und vorzugsweise die gesamte Gabel aus faserverstärktem Kunststoff, insbesondere Karbon, hergestellt ist.

Die Verdickung der Wandstärke und/ oder die Vergrößerung des Umfangs und/ oder auch die Vergrößerung der Breite der Gabel in Rahmenlängsrichtung erfolgt vorzugsweise nicht nur im Bereich der Bremssattelbefestigung sondern erstrecken sich auch in Richtung der Gabelbrücke, wobei die entsprechende Ausgestaltung der Versteifungselemente nicht vollständig bis zur Gabelbrücke hin erfolgen muss. Beispielsweise ist eine kontinuierliche Abnahme bzw. Anpassung an die ursprüngliche Gabelform, ausgehend von der Bremssattelbefestigung hin zur Gabelbrücke, vorteilhaft. Dies hat insbesondere den Vorteil, dass stufenfreie, weiche Übergänge realisiert werden können.

Die vorstehend beschriebene asymmetrische Ausgestaltung eines der beiden Gabelbeine im Vergleich zu dem anderen Gabelbein erfolgt vorzugsweise mindestens über 1/3 der Gesamtlänge des Gabelbeins. Besonders bevorzugt ist eine entsprechende Ausgestaltung, insbesondere über mindestens die Hälfte der Länge des Gabelbeins.

Das nicht mit einer Scheibenbremse verbundene Gabelbein verbleibt erfindungsgemäß unverändert und weist somit auf Höhe der Bremssattelbefestigung kein Versteifungselement auf. Insbesondere ist keine Wandstärkenverdickung, keine Umfangsvergrößerung und dgl. vorgesehen.

Die vorstehend beschriebene erfindungsgemäße Ausgestaltung der Fahrradgabel ist auch für gefederte Rennrad-Fahrradgabeln geeignet. Hierbei kann es sich insbesondere um Monoshock-Federungen, d.h. Federungen des Gabelrohrs, handeln.

Nachfolgend wird die Erfindung anhand einer bevorzugten Ausführungsform unter Bezugnahme auf die anliegenden Zeichnungen näher erläutert.

### Es zeigen:

- Fig. 1: eine schematische perspektivische Ansicht einer erfindungsgemäßen Fahrradgabel, und
- Fig. 2: eine schematische Schnittansicht entlang der Linie II-II in Fig. 1.

Eine Fahrradgabel, bei der es sich insbesondere um eine Rennrad-Fahrradgabel handelt, weist zwei Gabelbeine 10, 11 auf, die über eine Gabelbrücke 12 miteinander verbunden sind. Mit der Gabelbrücke 12 ist der Gabelschaft 14 verbunden. Die Ausfallenden 16 der beiden Gabelbeine 10, 11 dienen zur Aufnahme der Nabe bzw. der Naben-Achse des Vorderrads.

Bezogen auf eine Fahrtrichtung 18 der montierten Fahrradgabel ist bei der erfindungsgemäßen Fahrradgabel an dem in Fahrtrichtung linken Gabelbein 10 eine Bremssattelbefestigung in Form zweier Ansätze 20 vorgesehen. Um die beim Bremsen mit einer Scheibenbremse auftretenden Kräfte und Momente über die Bremssattelbefestigung 20 in das in Fahrtrichtung linke Gabelbein 10 einleiten zu können und ein Beschädigen des Gabelbeins 10 zu vermeiden, ist das linke Gabelbein 10 erfindungsgemäß mit einem Versteifungselement versehen.

Im dargestellten Ausführungsbeispiel ist das Versteifungselement einstückig mit dem Gabelbein 10 ausgebildet, wobei es sich insbesondere um eine Fahrradgabel aus Faserverbundwerkstoff handelt.

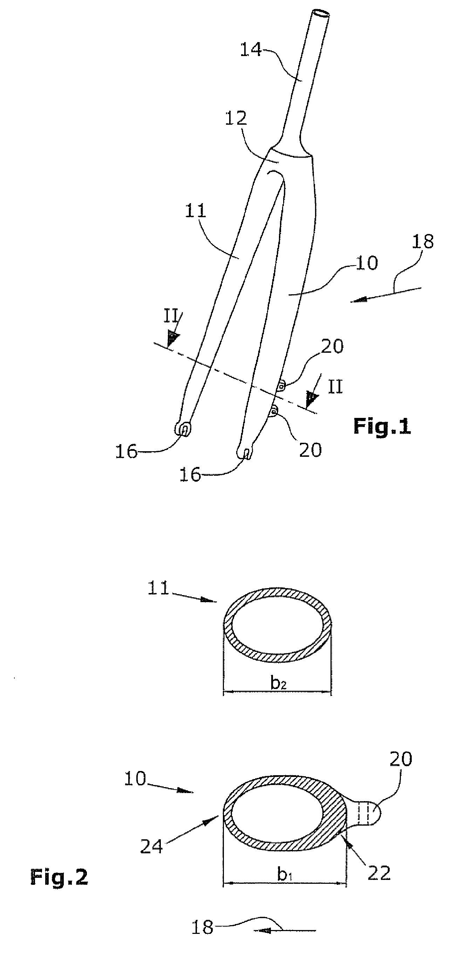

Die Wandstärke des linken Gabelbeins 10 ist, wie insbesondere aus Fig. 2 ersichtlich, verdickt bzw. dicker ausgebildet. Insbesondere der, bezogen auf die Fahrtrichtung 18, nach hinten weisende Bereich 22 des Gabelbeins 10 weist eine dickere Wandstärke auf. Die Wandstärke verringert sich in Umfangsrichtung auf den beiden Seiten und weist im dargestellten Ausführungsbeispiel im vorderen Bereich 24 wieder die herkömmliche Wandstärke des anderen Gabelbeins 11 auf. Ferner ist in Rahmenlängsrichtung 18 die Breite b₁ des Gabelbeins 10 zumindest im Bereich der Bremssattelbefestigung, d.h. insbesondere im Bereich der beiden Ansätze 20, größer als die Breite b₂ des unveränderten Gabelbeins 11.

Der Querschnitt des Gabelbeins 10 kann, ausgehend von dem Ausfallende 16 bis zur Gabelbrücke 12 im Wesentlichen identisch sein. Sowohl die Vergrößerung der Wandstärke als auch die Vergrößerung der Breite kann jedoch auch in Richtung der Gabelbrücke 12 wieder abnehmen, so dass die beiden Gabelbeine 10, 11 im Bereich der Gabelbrücke 12 wieder den identischen Querschnitt aufweisen.

Im Bereich der Bremssattelbefestigung ist in Fahrtrichtung 18 die Breite b₁ vorzugsweise um 2 bis 3 mm größer als die Breite b₂.

## Patentansprüche

1. Fahrradgabel für Scheibenbremsen, mit
zwei über eine Gabelbrücke (12) miteinander verbundenen Gabelbeinen (10, 11), und
einer an einem der beiden Gabelbeine (10, 11) angeordneten Bremssattelbefestigung (20),
**gekennzeichnet durch**
ein zumindest im Bereich der Bremssattelbefestigung (20) vorgesehenen Versteifungselement zur Aufnahme und Übertragung von Bremskräften und/ oder Bremsmomenten.

2. Fahrradgabel nach Anspruch 1, **dadurch gekennzeichnet, dass** das Versteifungselement in das Gabelbein (10) integriert ist.

3. Fahrradgabel nach einem der Ansprüche 1 oder 2, **dadurch gekennzeichnet, dass** zwischen dem Gabelbein (10) und dem Versteifungselement ein fließender, stufenfreier Übergang besteht.

4. Fahrradgabel nach einem der Ansprüche 1 bis 3, **dadurch gekennzeichnet, dass** das das Versteifungselement aufweisende Gabelbein (10) im Querschnitt rund, oval oder elliptisch ausgebildet ist.

5. Fahrradgabel nach einem der Ansprüche 1 bis 4, **dadurch gekennzeichnet, dass** das Versteifungselement eine Verdickung der Wandstärke des Gabelbeins (11) aufweist.

6. Fahrradgabel nach einem der Ansprüche 1 bis 5, **dadurch gekennzeichnet, dass** das Versteifungselement eine Umfangsvergrößerung des Gabelbeins aufweist.

7. Fahrradgabel nach einem der Ansprüche 1 bis 6, **dadurch gekennzeichnet, dass** das Versteifungselement eine Vergrößerung der Breite (b₁) des Gabelbeins (11) in Rahmenlängsrichtung (18) aufweist.

8. Fahrradgabel nach einem der Ansprüche 1 bis 7, **dadurch gekennzeichnet, dass** das Gabelbein (11) mit Versteifungselement zumindest im Bereich der Bremssattelbefestigung (20) eine dickere Wandstärke und/ oder einen größeren Umfang und/ oder eine größere Breite (b₁) in Rahmenlängsrichtung (18) als das andere Gabelbein (10) ohne Bremssattelbefestigung aufweist.

9. Fahrradgabel nach einem der Ansprüche 1 bis 8, **dadurch gekennzeichnet, dass** sich das Versteifungselement von einem Ausfallende (16) des Gabelbeins (11) bis zur Gabelbrücke (12) erstreckt.

10. Fahrradgabel nach einem der Ansprüche 1 bis 9, **dadurch gekennzeichnet, dass** das Versteifungselement einstückig mit dem Gabelbein (11) ausgebildet ist.

11. Fahrradgabel nach einem der Ansprüche 1 bis 10, **dadurch gekennzeichnet, dass** die beiden Gabelbeine (10, 11), insbesondere die gesamte Fahrradgabel, aus faserverstärktem Kunststoff hergestellt ist.

12. Fahrradgabel nach einem der Ansprüche 1 bis 11, **dadurch gekennzeichnet, dass** das Versteifungselement aus faserverstärktem Kunststoff hergestellt ist.

13. Fahrradgabel nach einem der Ansprüche 1 bis 12, **dadurch gekennzeichnet, dass** die Fahrradgabel als ungefederte Fahrradgabel, insbesondere für Rennräder, ausgebildet ist.

## Geänderte Patentansprüche

### Geänderte Patentansprüche gemäss Regel 137(2) EPÜ.

**1.** Ungefederte Rennrad-Fahrradgabel für Scheibenbremsen, mit
zwei über eine Gabelbrücke (12) miteinander verbundenen Gabelbeinen (10, 11),
einer einzigen an einem der beiden Gabelbeine (10, 11) angeordneten Bremssattelbefestigung (20), und
einem zumindest im Bereich der Bremssattelbefestigung (20) vorgesehenen Versteifungselement zur Aufnahme und Übertragung von Bremskräften und/ oder Bremsmomenten,
wobei das Gabelbein (11) mit Versteifungselement zumindest im Bereich der Bremssattelbefestigung (20) eine dickere Wandstärke und/ oder einen größeren Umfang und/ oder eine größere Breite (b₁) in Rahmenlängsrichtung (18) als das andere Gabelbein (10) ohne Bremssattelbefestigung aufweist.

**2.** Rennrad-Fahrradgabel nach Anspruch 1, **dadurch gekennzeichnet, dass** das Versteifungselement in das Gabelbein (10) integriert ist.

**3.** Rennrad-Fahrradgabel nach einem der Ansprüche 1 oder 2, **dadurch gekennzeichnet, dass** zwischen dem Gabelbein (10) und dem Versteifungselement ein fließender, stufenfreier Übergang besteht.

**4.** Rennrad-Fahrradgabel nach einem der Ansprüche 1 bis 3, **dadurch gekennzeichnet, dass** das das Versteifungselement aufweisende Gabelbein (10) im Querschnitt rund, oval oder elliptisch ausgebildet ist.

**5.** Rennrad-Fahrradgabel nach einem der Ansprüche 1 bis 4, **dadurch gekennzeichnet, dass** sich das Versteifungselement von einem Ausfallende (16) des Gabelbeins (11) bis zur Gabelbrücke (12) erstreckt.

**6.** Rennrad-Fahrradgabel nach einem der Ansprüche 1 bis 5, **dadurch gekennzeichnet, dass** das Versteifungselement einstückig mit dem Gabelbein (11) ausgebildet ist.

**7.** Rennrad-Fahrradgabel nach einem der Ansprüche 1 bis 6, **dadurch gekennzeichnet, dass** die beiden Gabelbeine (10, 11), insbesondere die gesamte Fahrradgabel, aus faserverstärktem Kunststoff hergestellt ist.

**8.** Rennrad-Fahrradgabel nach einem der Ansprüche 1 bis 7, **dadurch gekennzeichnet, dass** das Versteifungselement aus faserverstärktem Kunststoff hergestellt ist.
